# EUROPÄISCHE PATENTSCHRIFT

(11) **EP 3 530 999 B1**
(45) Veröffentlichungstag und Bekanntmachung des Hinweises auf die Patenterteilung: **22.04.2020**
(21) Anmeldenummer: 18158409.5
(22) Anmeldetag: 23.02.2018
(51) Int. Cl.: F16L 5/08

(54) **PRESSDICHTUNGSSYSTEM**
PRESS SEAL SYSTEM
SYSTÈME D'ÉTANCHÉITÉ PAR PRESSION

(43) Veröffentlichungstag der Anmeldung: 28.08.2019
(73) Patentinhaber: Hauff-Technik GmbH & Co. KG, 89568 Hermaringen (DE)
(72) Erfinder: Handwerker, Christoph, 89407 Dillingen / Donau (DE)
(74) Vertreter: König Szynka Tilmann von Renesse Patentanwälte Partnerschaft mbB

(56) Entgegenhaltungen:
- DE-A1-102009 033 187
- DE-U1- 9 318 092
- DE-U1- 20 301 210
- DE-U1-202009 004 739
- DE-U1-202014 003 430

## Beschreibung

Die vorliegende Erfindung betrifft ein Pressdichtungssystem zum Montieren an einer Öffnung.

Aus der DE 93 18 092 U1 ist ein Dichtungseinsatz bekannt, nämlich eine Pressdichtung mit einer elastischen Dichtscheibe, die zwischen axial beidseits angeordneten Spannscheiben gestaucht und damit dichtend angepresst wird. Mit einer der Spannscheiben ist ein Flansch verbunden, der an der Seitenfläche der Wand verschraubt wird.

Auch die DE 20 2009 004 739 A1 zeigt eine Pressdichtung mit einer flanschartig erweiterten Spannplatte. Die Pressdichtung wird zur Montage in dünnen Wänden in eine Gewindehülse gesetzt.

Die DE 20 2014 003 430 U1 zeigt ebenfalls ein Dichtsystem mit einer Pressdichtung. Mit dieser ist ein Flanschelement, das dann an der Seitenfläche der Wand anliegt, über Gewindestangen verbunden.

Ein vorteilhaftes Anwendungsgebiet des erfindungsgemäßen Pressdichtungssystems liegt im Bereich der Gebäude- bzw. Hauseinführungen. Mit einer solchen Einführung kann ein Gewerk von außen in ein Gebäude hineingeführt werden, bspw. eine Gas-, Wasser- oder Strom- bzw. Datenleitung. Besonders vorteilhaft kann ein Zusammenlegen mehrerer Gewerke sein, weil dann gebäudeaußenseitig nur ein Graben ausgehoben und dann wieder verfüllt werden muss. Die jeweilige Leitung liegt dabei nicht direkt im Erdreich, sondern wird in einem Hohlrohr (Schutzrohr) an die Gebäudewand herangeführt. Das in Rede stehende Pressdichtungssystem kann insbesondere Teil der eigentlichen Gebäudeeinführung sein, nämlich der Montage eines oder mehrerer Mantelrohre in der Wandöffnung dienen. An ein jeweiliges Mantelrohr wird dann ein jeweiliges, im Erdreich an die Gebäudewand herangeführtes Schutzrohr angeschlossen. Anschließend kann die eigentliche Leitung durch das Schutzrohr und das Mantelrohr, und damit durch die Wandöffnung, ins Gebäudeinnere verlegt werden.

Zur Montage an bzw. in der Öffnung ist eine Pressdichtung vorgesehen, die einen Elastomerkörper und eine Verspanneinrichtung aufweist. Der Elastomerkörper kann mit der Verspanneinrichtung entlang einer Spannachse gestaucht und folglich in Richtungen senkrecht dazu angepresst werden. In Montageposition fällt die Spannachse typischerweise mit einer Längsachse der Öffnung zusammen, durch das axiale Stauchen wird der Elastomerkörper also gegen eine die Öffnung begrenzende Laibung gepresst. Zugleich kann er sich dichtend an z. B. die Außenmantelfläche eines hindurchgeführten Mantelrohres anlegen. Die Pressdichtung kann hierbei nicht nur eine Dichtfunktion übernehmen, sie dient auch der Befestigung, sitzt nämlich im verspannten Zustand sicher in der Wandöffnung.

Der vorliegenden Erfindung liegt das technische Problem zugrunde, ein vorteilhaftes Pressdichtungssystem mit einer Pressdichtung sowie eine vorteilhafte Montage dieses Pressdichtungssystems anzugeben.

Dies wird erfindungsgemäß mit dem Pressdichtungssystem gemäß Anspruch 1 und der Verwendung gemäß Anspruch 13 gelöst. Das Pressdichtungssystem weist zusätzlich zu der Pressdichtung ein Flanschelement mit einem Spannelement auf, und ferner weist es einen Abstandhalter auf. Das Flanschelement ist an der Pressdichtung gehalten, und zwar bezogen auf deren Spannachse axial versetzbar. Das an der Pressdichtung gehaltene Flanschelement kann also von einer bezogen auf die axiale Richtung der Pressdichtung distalen Position in eine der Pressdichtung proximale Position gebracht werden, jedenfalls in der proximalen Position ist es dann von dem Spannelement an der Pressdichtung gehalten (je nach Ausgestaltung kann das Flanschelement auch bereits in der distalen Position von dem Spannelement an der Pressdichtung gehalten sein, dies ist aber nicht zwingend, siehe unten im Detail).

Das Flanschelement weist einen nach außen überstehenden Flansch auf, dieser kann mit dem Versetzen des Flanschelements in die proximale Position an eine Wandfläche angedrückt werden, insbesondere also an eine Gebäudeaußenwandfläche. Dies ist insoweit von Vorteil, als die Außenwandfläche einer Gebäudewand, konkret einer Kelleraußenwand, typischerweise mit einer Gebäudeabdichtung versehen ist, etwa einer Dichtschlemme (Bitumenbeschichtung). Im Bereich der Öffnung ist diese Gebäudeabdichtung unterbrochen, und sie kann mit dem nach außen überstehenden Flansch wieder geschlossen werden. Wird das Flanschelement in die der Pressdichtung proximale Position gebracht, legt sich der Flansch dichtend an die Gebäudeabdichtung an, er kann die Öffnung so gemeinsam mit der Pressdichtung nach außen hin dichtend verschließen.

Ein besonderer Vorteil des vorliegenden Pressdichtungssystems liegt darin, dass das Flanschelement auch bereits in der distalen Position unverlierbar an der Pressdichtung gehalten ist; die beiden hängen zusammen, können also als eine

Einheit gehandhabt und montiert werden. Die Montage kann damit auf vorteilhafte Weise erfolgen, indem
- zunächst die Pressdichtung mit dem Flanschelement darin gemeinsam an die Öffnung gesetzt werden;
- dann die Pressdichtung durch Betätigen der Verspanneinrichtung in der Öffnung befestigt wird, wobei das Flanschelement in der distalen Position angeordnet ist;
- anschließend das Flanschelement zumindest in Richtung der proximalen Position versetzt und damit der Flansch gegen die Wandfläche gedrückt wird. Das Spannelement hält das Flanschelement dann gegen die Wandfläche verspannt an der Pressdichtung.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Die Offenbarung ist insbesondere auf das Pressdichtungssystem und gleichermaßen dessen Montage zu lesen; wird also bspw. ein für eine bestimmte Montage geeignetes Pressdichtungssystem beschrieben, ist dies auch als Offenbarung eines entsprechenden Montageverfahrens zu lesen, und umgekehrt.

Die "Spannachse" der Pressdichtung bzw. des Elastomerkörpers liegt bevorzugt parallel zu einem Spannbolzen als Teil der Verspanneinrichtung, bevorzugt gibt es mehrere Spannbolzen. Durch Betätigen des bzw. der Spannbolzen wird der Elastomerkörper axial gestaucht (die Spannachse liegt parallel zu Drehachse). Vorzugsweise ist der bzw. sind die Spannbolzen dazu drehbar, handelt es sich also um (einen) Schraubbolzen. Bevorzugt weist die Verspanneinrichtung ferner an beiden einander axial entgegengesetzten Stirnseiten des Elastomerkörpers jeweils einen Presskörper auf; die Presskörper sind über den bzw. die Spannbolzen dahingehend wirkverbunden, dass sie durch Anziehen der Spannbolzen axial aufeinander zubewegt werden können (womit der Elastomerkörper axial gestaucht wird). Die Spannachse durchsetzt den Elastomerkörper mittig, im Falle eines Elastomerkörpers mit bevorzugt kreisrundem Querschnitt ist dessen Außenwandfläche um die Spannachse rotationssymmetrisch. Generell beziehen sich ohne ausdrücklich gegenteilige Angabe "innen" und "außen" auf die Spannachse als Zentrum und die dazu senkrechten Richtungen.

Die Presskörper können bspw. plattenförmig, etwa als Metallplatten, oder auch in komplexerer Form mit Verstärkungsrippen etc. vorgesehen sein, insbesondere bei spritzgegossenen Hartkunststoff-Presskörpern. Ein jeweiliger Presskörper kann auch mehrteilig vorgesehen, bspw. in mehrere Segmente untergliedert sein. Auch unabhängig davon kann sich ein Schraubbolzen dann bspw. an einem Presskörper mit seinem Schraubenkopf abstützen und am axial entgegengesetzten Presskörper in ein Gewinde eingreifen. Das Gewinde kann bspw. in dem Presskörper selbst eingeschnitten sein, es kann aber auch eine Mutter vorgesehen sein, etwa als gesondertes Teil oder auch als Einlegeteil umspritzt. Wenngleich eine Verspanneinrichtung mit Presskörpern bevorzugt ist, wäre im Allgemeinen anstelle eines stirnseitig angeordneten Presskörpers bspw. auch ein in den Elastomerkörper selbst eingeformtes Innengewinde denkbar, das z. B. von einer als Einlegeteil umspritzten Mutter gebildet werden kann.

Unabhängig von der Ausgestaltung der Verspanneinrichtung im Einzelnen liegt eine Besonderheit darin, dass diese und das Spannelement voneinander verschieden sind und auch unabhängig voneinander betätigbar sind. Dementsprechend kann zunächst die Verspanneinrichtung der Pressdichtung zu deren Montage betätigt werden, kann/können also bspw. der/die Schraubbolzen unabhängig von dem Spannelement des Flanschelements angezogen werden. Umgekehrt lässt dann auch ein Betätigen bzw. Anziehen des Spannelements, womit der Flansch in die Anlage gedrückt wird, die Verspannung des Elastomerkörpers unverändert. Damit ist insgesamt die vorstehend geschilderte, zweistufige Montage möglich - die verspannte Pressdichtung sitzt an einer definierten Axialposition in der Öffnung, das Flanschelement wird dann in die proximale Position versetzt und der Flansch angedrückt.

Das Spannelement kann im Allgemeinen bspw. auch ein Rastelement sein, sodass das Flanschelement in der proximalen Position verrastet. Dies könnte bspw. mit einem Schlag auf das Flanschelement, etwa mit einem Hammer, erreicht werden. Bevorzugt ist generell ein Spannelement, welches das Flanschelement auch bereits in der distalen Position an der Pressdichtung hält. Bevorzugt ist ein Gewindebolzen als Spannelement vorgesehen, siehe unten im Detail.

Der Flansch überragt die Pressdichtung in den Richtungen senkrecht zur Spannachse nach außen, bevorzugt über einen vollständigen Umlauf. Gegenüber der Pressdichtung kann sich der Flansch dann in einer jeweiligen, zur Spannachse senkrechten Richtung bspw. um mindestens 10 mm, 20 mm bzw. 30 mm nach außen erstrecken, mit möglichen (davon unabhängigen) Obergrenzen bei bspw. höchstens 30 cm, 20 cm bzw. 15 cm (jeweils in der Reihenfolge der Nennung zunehmend bevorzugt).

Bezüglich einer besonders vorteilhaften Anwendung des Pressdichtungssystems wird ausdrücklich auf die Anmerkungen eingangs verwiesen. Wenngleich im Allgemeinen auch eine Anwendung als "Blindverschluss" denkbar ist, weist der Elastomerkörper bevorzugt eine oder mehrere Durchgangsöffnungen zum Hindurchführen von Leitungen auf, bevorzugt wird bzw. ist in einer jeweiligen Durchgangsöffnung ein Hohlrohr (Mantelrohr) angeordnet, durch das später die eigentliche Leitung geführt wird. Mit dem Verspannen wird der Elastomerkörper dann nicht nur gegen die Laibung, sondern auch gegen die Leitung bzw. das Mantelrohr angepresst. Bevorzugt ist das Pressdichtungssystem Teil einer Gebäudeeinführung (siehe unten), wird der Flansch also zum Abdichten gegen eine Gebäudeabdichtung genutzt.

Das Elastomermaterial des Elastomerkörpers ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Erfindungsgemäß ist ein Abstandhalter vorgesehen. Dieser hält in einer Blockadekonfiguration das Flanschelement in der distalen Position, in einer Freigabekonfiguration gibt er das Versetzen in die proximale Position frei. In der Anwendung verbleibt der Abstandhalter während der Montage der Pressdichtung in der Blockadestellung, womit dem Flanschelement für das spätere Verspannen ein bestimmter, definierter Stellweg vorgegeben wird. Ist die Pressdichtung verspannt, kann der Abstandhalter entfernt und das Flanschelement um (maximal) diesen Stellweg zu der Pressdichtung hin versetzt werden. In der Anwendung muss dieser maximal mögliche Stellweg dann selbstverständlich nicht vollständig genutzt werden (der tatsächliche Versatz kann bspw. von der Dicke/Nachgiebigkeit der Gebäudeabdichtung bzw. auch der Beschaffenheit des Flansches selbst abhängen), es steht aber jedenfalls hinreichend Stellweg für ein dichtes Anpressen zur Verfügung.

Besonders vorteilhaft kann eine Anwendung dahingehend sein, dass der Flansch nach dem Einsetzen der Pressdichtung in die Öffnung, noch bevor diese verspannt wird, in die Anlage an der Wandfläche geschoben wird. Über den Abstandhalter ist der Pressdichtung dabei ein definierter Relativabstand zum Flanschelement vorgegeben, die Pressdichtung wird also zugleich in eine definierte Position in der Öffnung gebracht. Sie wird dann verspannt, danach wird der Abstandhalter in die Freigabeposition gebracht und kann das Flanschelement zur Pressdichtung hin verspannt und damit der Flansch angedrückt bzw. noch fester angedrückt werden, was eine gute Abdichtung gewährleistet.

Im Allgemeinen ist bspw. auch ein einstückig/monolithisch mit der Pressdichtung, insbesondere einem Presskörper, und/oder dem Flanschelement ausgebildeter Abstandhalter denkbar. Der Abstandhalter könnte also bspw. in einem Spritzgusswerkzeug als Teil des Flanschelements und/oder des Presskörpers berücksichtigt sein. Dabei könnte bspw. eine Sollbruchstelle vorgesehen sein und der Abstandhalter durch Auftrennen der Sollbruchstelle in die Freigabekonfiguration gebracht werden. Bevorzugt ist ein Abstandhalter, der aus einer Blockadestellung (=Blockadekonfiguration) in eine Freigabestellung (=Freigabekonfiguration) bewegt wird bzw. bewegbar ist.

In bevorzugter Ausgestaltung ist der Abstandhalter als gesondertes Teil vorgesehen, ist er also zu der Pressdichtung und dem Flanschelement mehrstückig. In der Blockadestellung ist der Abstandhalter axial zwischen der Pressdichtung und dem Flanschelement angeordnet, durch Herausnehmen des Abstandhalters kann der Axialversatz freigegeben werden. Bevorzugt lässt sich der Abstandhalter mit einer Bewegung herausziehen, die zumindest einen Anteil (eine Richtungskomponente) in einer zur Spannachse senkrechten Richtung hat, besonders bevorzugt kann eine ausschließlich senkrecht zur Spannachse liegende Ausziehbewegung sein.

In bevorzugter Ausgestaltung ist der Abstandhalter, wenngleich mehrteilig, in der Blockadestellung gegen ein Herausfallen gesichert. Somit wird einer unbeabsichtigten Freigabe, also einem unbeabsichtigten Versetzen in die Freigabestellung vorgebeugt. Zur Sicherung des Abstandhalters ist bspw. ein Sicherungsstift denkbar, ebenso könnte ein Klebeband zu lösen sein. Bevorzugt kann ein kraftschlüssig in der Blockadestellung gehaltener Abstandhalter sein. Vorzugsweise ist dazu ein Kanal in dem Flanschelement, in welchen der Abstandhalter, bzw. ein Schenkel davon eingeschoben und in der Blockadestellung angeordnet ist, lokal derart verjüngt, dass der Abstandhalter in dieser Verjüngung in einem Klemmsitz sitzt. Der Abstandhalter kann also bspw. von einer vom Flanschelement gebildeten Quetschrippe gehalten sein. Bevorzugt ist die zum Ausziehen des kraftschlüssig gehaltenen Abstandhalters notwendige Kraft größer als dessen Gewichtskraft (die sich nach der Masse des Abstandhalter bestimmt und zusammen mit der Erdbeschleunigung ergibt).

In bevorzugter Ausgestaltung ist ein elastisch auslenkbares Anschlagelement als Herausfallsicherung vorgesehen. Der Abstandhalter kann entweder bereits in der Blockadestellung daran anliegen oder jedenfalls entlang einer Bewegungsstrecke aus der Blockadestellung heraus, solange er den Relativversatz noch blockiert, einen Anschlag an dem Anschlagelement finden. Das Anschlagelement ist in seiner elastischen Auslenkbarkeit einerseits so stabil, dass ein unbeabsichtigtes Herausfallen verhindert wird. Das Anschlagelement kann den Abstandhalter bspw. gegen sein Gewicht (die Schwerkraft) halten. Andererseits lässt sich das Anschlagelement aber mit einer etwas größeren Kraft auslenken, sodass der Abstandhalter von bspw. einem Monteur herausgenommen werden kann. Das Anschlagelement kann bspw. zapfenförmig vorgesehen sein, es kann insbesondere im Gesamten aus einem gummielastischen Material gebildet sein.

In bevorzugter Ausgestaltung beträgt der Stellweg, den der Abstandhalter in der Freigabestellung freigibt, mindestens 5 mm, weiter und besonders bevorzugt mindestens 6 mm bzw. 7 mm. Mögliche Obergrenzen können bspw. bei höchstens 20 mm, 15 mm bzw. 10 mm liegen (in der Reihenfolge der Nennung zunehmend bevorzugt), wobei Ober- und Untergrenze im Allgemeinen auch unabhängig voneinander von Interesse sein können. Besonders bevorzugt kann ein Stellweg von rund 8 mm sein. Bevorzugt entspricht der Stellweg dem Abstand zwischen proximaler und distaler Position, hat also das Flanschelement kein Spiel über den Abstandhalter hinaus; bei eingesetztem Abstandhalter kann es nicht nur nicht zur Pressdichtung hin, es kann auch nicht von dieser weg versetzt werden.

Wie bereits erwähnt, ist das Spannelement, welches das Flanschelement jedenfalls in der proximalen Position an der Pressdichtung hält, bevorzugt ein Bolzen, vorzugsweise ein Gewindebolzen. Durch Anziehen des Gewindebolzens kann das Flanschelement zur Pressdichtung hin verspannt und kann damit der Flansch an die Wandfläche angedrückt werden. Im Allgemeinen ist bspw. auch ein Gewindebolzen denkbar, der in den Elastomerkörper der Pressdichtung selbst greift, bspw. mit einem selbstschneidenden Gewinde. Bevorzugt greift der Gewindebolzen in einen Presskörper der Pressdichtung, der an der dem Flanschelement zugewandten Stirnseite des Elastomerkörpers angeordnet ist. Auch hier ist im Allgemeinen ein selbstschneidender Eingriff denkbar, bevorzugt weist der Presskörper ein entsprechendes Innengewinde auf, wozu bspw. eine Mutter umspritzt oder auch in den Presskörper selbst ein Gewinde eingeschnitten sein kann. Generell kann ein Vorteil des Gewindebolzens bspw. darin liegen, dass damit ein definiertes und sehr genau einstellbares Verspannen des Flanschelements zu der Pressdichtung hin möglich ist. Der Gewindebolzen kann bspw. angezogen werden, bis ein bestimmtes Drehmoment erreicht ist, was sich bspw. mit einem Drehmomentschlüssel überprüfen lässt, wobei der Flansch dann sicher dichtend gegen die Wandfläche gepresst wird.

Alternativ zu einem Gewindebolzen kann im Allgemeinen auch ein Spannbolzen vorgesehen sein, auf den die Kraft bspw. mit einem Exzenterhebel aufgebracht wird. Ein solcher Spannbolzen kann sich von der Pressdichtung axial durch das Flanschelement hindurch erstrecken, wobei der Exzenterhebel dann axial zwischen der der Pressdichtung abgewandten Stirnseite des Flanschelements und dem axialen Ende des Spannbolzens angeordnet ist. Durch Umlegen des Exzenterhebels wird das Flanschelement von diesem axialen Ende des Spannbolzens weg, zur Pressdichtung hin gedrückt.

Bei einer bevorzugten Ausführungsform weist der Flansch ein umlaufendes Dichtelement zur Anlage an der Wandfläche auf. Ferner weist der Flansch ein demgegenüber steiferes Versteifungselement auf, welches das Dichtelement beim Verspannen des Flanschelements zur Wandfläche hin andrückt. Bevorzugt ist ein Mittenteil des Flanschelements, welches mit der Pressdichtung axial fluchtet, aus demselben, durchgehenden Material wie das Versteifungselement vorgesehen, bevorzugt handelt es sich um ein Hartkunststoffteil, etwa aus ABS oder PC. Generell überträgt das Spannelement die Kraft bevorzugt auf das Mittenteil, womit vorteilhafterweise auch das Versteifungselement und damit das Dichtelement angedrückt wird.

Ein Dichtelementmaterial, aus welchem das Dichtelement vorgesehen ist, ist weicher als ein Versteifungselementmaterial, hat also eine geringere Shore-Härte. In absoluten Werten kann die Shore-Härte (Shore A) des Dichtelementmaterials bspw. bei höchstens 80 Shore, 75 Shore bzw. 70 Shore liegen, mit möglichen (davon unabhängigen) Untergrenzen bei bspw. mindestens 20 Shore, 25 Shore, 30 Shore, 35 Shore bzw. 40 Shore. Das Versteifungselementmaterial kann bspw. eine Shore-Härte (Shore D) von mindestens 50 Shore, 60 Shore bzw. 70 Shore haben, mit möglichen Obergrenzen bei höchstens 85 Shore bzw. 80 Shore. Das Versteifungselement wird bevorzugt spritzgegossen. Hinsichtlich der Formgebung können bspw. sich umlaufend und/oder radial erstreckende Versteifungsrippen vorgesehen sein, insbesondere an der dem Dichtelement axial abgewandten Seite. Das Dichtelement kann im Allgemeinen auch gemeinsam mit dem Versteifungselement als Mehr-Komponenten-Spritzgussteil (insbesondere 2K-Teil) gemeinsam spritzgegossen werden, bevorzugt wird es gesondert hergestellt und mit dem Versteifungselement zusammengesetzt.

Unabhängig davon im Einzelnen liegt das Dichtelement in bevorzugter Ausgestaltung an einer Außenwandfläche der Pressdichtung an. Es dichtet also nicht nur im montierten Zustand gegen die Wandfläche, sondern auch gegen die Pressdichtung. Aufgrund der in der Öffnung angeordneten Pressdichtung könnte Feuchtigkeit bzw. Wasser von der Gebäudeaußenseite zwar nicht durch die Wandöffnung selbst ins Gebäudeinnere gelangen, das Wasser könnte aber über die Wandöffnung ins Mauerwerk gelangen. Schlimmstenfalls kann das Mauerwerk dauerhaft Schaden nehmen bzw. kann es auch eine weitergehende Ausbreitung ins Gebäudeinnere geben.

Das Dichtelement könnte im Allgemeinen auch an dem Elastomerkörper anliegen. Bevorzugt ist das gesamte Pressdichtungssystem jedoch derart ausgelegt, dass der Elastomerkörper vollständig in der Öffnung liegt, wenn die Pressdichtung mit dem Flanschelement in der distalen Position so weit eingeschoben wird, dass der Flansch in der Wandfläche anliegt. Das Dichtelement liegt deshalb bevorzugt an jenem Presskörper an, der an der dem Flanschelement zugewandten Stirnseite des Elastomerkörpers sitzt. Insoweit kann die Verwendung eines Kunststoff-Presskörpers von Vorteil sein, weil dieser ohne übermäßiges Materialgewicht mit einer hinreichenden axialen Bautiefe gefasst werden kann, entsprechend also eine hinreichend große Außenwandfläche hat.

Generell kann eine geometrische Anpassung des Dichtelements von Vorteil sein, kann es also bspw. außenseitig eine schräg zur Wand hin angestellte Dichtschürze bzw. -lippe aufweisen. Innerhalb davon kann es bspw. eine oder auch mehrere umlaufende Wulste geben, die beim Andrücken des Flansches eine zuverlässig dichtende Anlage finden. Zusätzlich oder alternativ kann das Dichtelement auch im Bereich an der Pressdichtung verdickt, also axial langgestreckt sein, sodass hier eine hinreichend große Anlagefläche gebildet wird.

Bei einer bevorzugten Ausführungsform erstreckt sich ein Abschnitt des Dichtelements axial durch das Versteifungselement hindurch und bildet dieser Abschnitt das vorstehend diskutierte Anschlagelement. Der Abschnitt sichert also den Abstandhalter gegen ein Herausfallen. Bevorzugt sind das Versteifungs- und das Dichtelement mehrstückig zueinander, wobei der besagte Abschnitt dann zugleich der Befestigung des Dichtelements am Versteifungselement dienen kann. Der Abschnitt kann bspw. zapfenförmig ausgebildet sein, bspw. vom Dichtelement weg konisch zulaufend, wobei eine Verdickung des Zapfens dort, wo dieser aus dem Versteifungselement hervortritt, einen der Relativfixierung dienenden Hinterschnitt bildet. Wenngleich ein Zapfen bevorzugt ist, ließe sich dasselbe Prinzip auch mit anderen Dichtelementabschnittsformen verwirklichen.

Bei einer bevorzugten Ausführungsform weist ein Mittenteil des Flanschelements, welches die Pressdichtung axial abdeckt, eine Öffnung auf, durch welche hindurch der Spannbolzen der Pressdichtung betätigt werden kann. Durch die Öffnung hindurch kann bspw. mit einem Schraubwerkzeug ein Gewindebolzen der Pressdichtung angezogen werden. Das Mittenteil des Flanschelements, also die Abdeckplatte, kann ferner, von der bzw. den Durchgangsöffnungen für die Leitungen bzw. Mantelrohre abgesehen, auch noch eine Öffnung zur Anzugskontrolle aufweisen. Die Pressdichtung ist nämlich bevorzugt mit einem Anzeigeelement ausgestattet, das bei hinreichender Verformung des Elastomerkörpers in einem Sichtbereich sichtbar wird, was eine optische Montagekontrolle ermöglicht. Bevorzugt ist mit dem Anzeigeelement axial fluchtend eine Öffnung im Mittenteil des Flanschelements vorgesehen, kann die Pressdichtung also durch das Flanschelement hindurch verspannt und kontrolliert werden.

In bevorzugter Ausgestaltung sind die Presskörper der Pressdichtung jeweils über ihre gesamte axiale Erstreckung gegenüber dem verspannten Elastomerkörper nach innen versetzt, also bezogen auf die Richtungen senkrecht zur Spannachse. Die Presskörper stehen also in anderen Worten nicht nach außen über, es hat also insbesondere der dem Flanschelement zugewandte Presskörper seinerseits keinen Flansch. In anderen Worten wäre die Pressdichtung, gäbe es das Flanschelement nicht, auch im Gesamten in die Öffnung einschiebbar, wird also umgekehrt diese Einschiebbarkeit allein von dem Flanschelement begrenzt.

Die Erfindung betrifft auch eine Gebäudeeinführung mit einem vorliegend beschriebenen Pressdichtungssystem und zusätzlich einem Mantelrohr, bevorzugt mehreren Mantelrohren. Bevorzugt weist die Gebäudeeinführung dann zusätzlich noch eine weitere Pressdichtung auf, wobei die beiden Pressdichtungen axial aufeinanderfolgend in der Öffnung angeordnet werden. Bevorzugt ist das bzw. sind die Mantelrohre in der weiteren Pressdichtung auszugsicher gehalten, bspw. mit einem Hinterschnitt. Bei der Montage wird dann zunächst die weitere Pressdichtung mit dem/den Mantelrohr(en) darin von der Gebäudeinnenseite her in die Öffnung eingeschoben, sodass das/die Mantelrohr(e) dann gebäudeaußenseitig überstehen. Das Pressdichtungssystem mit dem Flanschelement wird dann von der Gebäudeaußenseite her auf die Mantelrohre auf- und in die Öffnung eingeschoben, bevorzugt bis der Flansch an der Gebäudeaußenwandfläche anliegt. Mit der vorliegend im Detail diskutierten, zweistufigen Montage wird dann einerseits eine Abdichtung zu dem/den Mantelrohr(en) hin geschaffen, ferner dichtet der Flansch dann gegen die Gebäudeaußenwandfläche.

Die Erfindung betrifft auch eine Verwendung des Pressdichtungssystems oder der Gebäudeeinführung, wobei zunächst die Pressdichtung mit dem Flanschelement an die Öffnung (vorzugsweise in einer Kelleraußenwand) gesetzt wird, anschließend die Pressdichtung befestigt wird und danach das Flanschelement zur Pressdichtung hin und damit der Flansch gegen die Wandfläche verspannt wird. Bevorzugt wird die Pressdichtung in die Öffnung eingeschoben, bis der Flansch an der Wandfläche anliegt, und wird dann die Verspanneinrichtung betätigt.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Fig. 1: ein erfindungsgemäßes Pressdichtungssystem in schematischer Darstellung;
- Fig. 2: eine Detailansicht eines erfindungsgemäßen Pressdichtungssystems in einem Axialschnitt;
- Fig. 3: zu der Detailansicht gemäß Fig. 2 eine Schrägansicht;
- Fig. 4: eine Gebäudeeinführung mit einem erfindungsgemäßen Pressdichtungssystem in schematischer Darstellung.

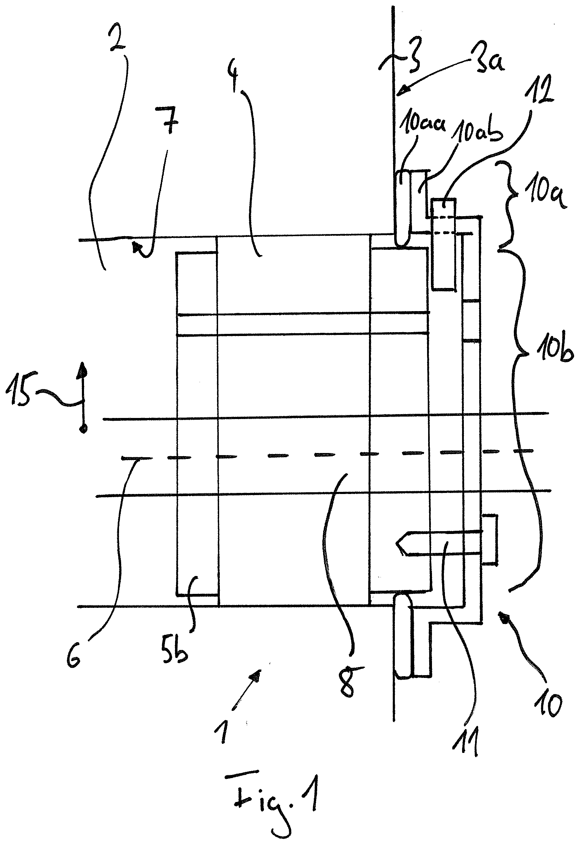

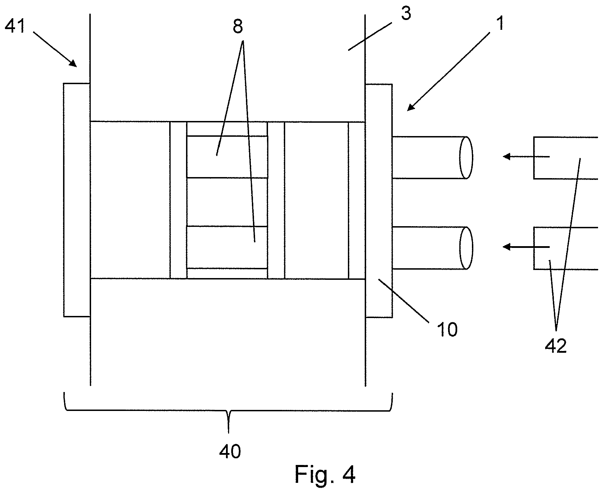

Fig. 1 zeigt ein erfindungsgemäßes Pressdichtungssystem 1, das an bzw. in einer Öffnung 2 einer Gebäudewand 3 montiert wird. Das Pressdichtungssystem 1 weist eine Pressdichtung mit einem Elastomerkörper 4 und einer Verspanneinrichtung 5 auf, nämlich axial beidseits des Elastomerkörpers 4 angeordneten Presskörpern 5a,b und einem diese Presskörper miteinander verbindenden Spannbolzen 5c, konkret einem Gewindebolzen (umlaufend verteilt in einer Mehrzahl Spannbolzen vorgesehen). Durch Anziehen des Spannbolzens 5c können die Presskörper 5a,b entlang einer Spannachse 6 aufeinander zubewegt werden, womit der Elastomerkörper 4 axial gestaucht wird. Der Elastomerkörper 4 legt sich infolgedessen dichtend nach radial außen an eine die Öffnung 2 begrenzende Laibung 7 und zugleich an ein durch den Elastomerkörper hindurchgeführtes Mantelrohr 8 an. Bezüglich dessen Funktion wird auf Fig. 4 und die zugehörige Beschreibung verwiesen (bevorzugt sind mehrere Mantelrohre vorgesehen, der Übersichtlichkeit halber ist nur eines gezeigt).

Ferner weist das Pressdichtungssystem 1 ein Flanschelement 10 auf, dessen Flanschelement 10a umlaufend nach außen übersteht. Das Flanschelement 10 ist relativ zu der Pressdichtung 4, 5 axial versetzbar, und zwar durch Anziehen eines Spannelements 11, nämlich eines Gewindebolzens. Wird dieser angezogen, wird das Flanschelement 10 axial zur Pressdichtung 4, 5 hin versetzt.

Das Flanschelement 10 ist zwischen einer in Fig. 1 gezeigten, der Pressdichtung 4, 5 distalen Position und einer (nicht dargestellten) proximalen Position axial versetzbar. Mit dem Versetzen des Flanschelements 10 in die proximale Position bzw. zu dieser hin wird der Flansch 10a dichtend an die Wandfläche 3a angedrückt. Das Pressdichtungssystem 1 weist ferner einen Abstandhalter 12 auf, der in der dargestellten Blockadestellung den Axialversatz des Flanschelements 10 zur Pressdichtung 4, 5 hin blockiert. Wird der Abstandhalter 12 herausgenommen, also in eine Freigabestellung gebracht, ist der Axialversatz freigegeben und kann das Flanschelement 10 zur Pressdichtung 4, 5 hin verspannt werden.

Das Pressdichtungssystem 1 ermöglicht in vorteilhafter Weise eine zweistufige Montage: Es wird zunächst die Pressdichtung 4, 5 in die Öffnung 2 eingeschoben, und zwar bis der Flansch 10a eine Anlage an der Wandfläche 3a findet. Dann wird durch Anziehen des Spannbolzens 5 der Elastomerkörper 4 axial gestaucht und in Richtungen 15 senkrecht dazu nach außen an die Laibung 7 angepresst, wird also die Pressdichtung 4, 5 montiert. Dabei kann der Flansch 10a bereits noch etwas mehr gegen die Wandfläche 3 gezogen werden (aufgrund des axialen Stauchens des Elastomerkörpers 4). In einem nächsten Schritt wird dann der Abstandhalter 12 entfernt, wird also die Axialversetzbarkeit des Flanschelements 10 freigegeben. Das Flanschelement kann durch Anziehen des Spannelements 11 zu der Pressdichtung 4, 5 hin versetzt werden, womit insbesondere der Flansch 10a noch fester angedrückt wird. Der Flansch 10a schafft somit eine zuverlässige Abdichtung zu einer Gebäudeabdichtung aus einer Dichtschlemme, welche die Wandfläche 3a bildet.

Dieses Andrücken des Flansches 10a wird auch dadurch unterstützt, dass dieser ein im Verhältnis weicheres Dichtelement 10aa und ein demgegenüber härteres Versteifungselement 10ab aufweist. Das Versteifungselement 10ab ist einstückig mit einem Mittenteil 10b des Flanschelements 10 vorgesehen, ist nämlich aus ABS spritzgegossen. Wird mit dem Spannelement 11 die Kraft auf das Mittenteil 10b übertragen, so drückt das Versteifungselement 10ab das Dichtelement 10aa in die dichtende Anlage gegen die Wandfläche 3a.

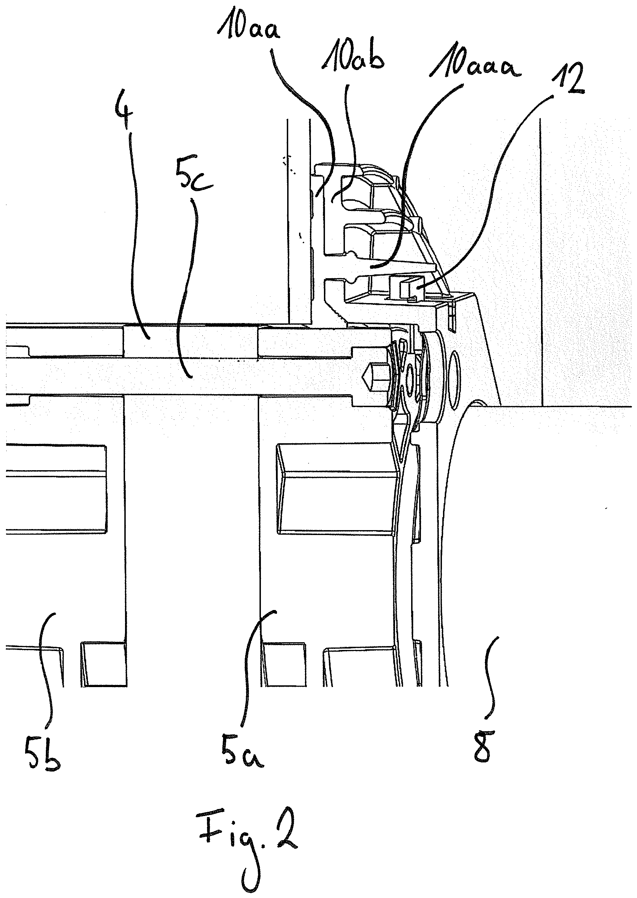

Das Dichtelement 10aa dichtet ferner auch gegen den Presskörper 5a, vgl. insbesondere auch den Axialschnitt gemäß Fig. 2. Damit kann keine Feuchtigkeit bzw. kein Wasser über die Öffnung 2 in das Wandelement 3 eindringen. In dem Schnitt gemäß Fig. 2 ist das in Fig. 1 nur schematisch gezeigte Dichtelement 10aa weiter im Detail zu erkennen. Es bildet eine nach außen, schräg zur Wandfläche angestellte Dichtschürze und ferner auch eine umlaufende Dichtwulst. Auch in dem Bereich, in dem es an der Außenwandfläche des Presskörpers 5a anliegt, ist es verdickt.

Das Versteifungselement 10ab und das Dichtelement 10aa sind gesondert hergestellt und zusammengesetzt. Wie in dem Schnitt gemäß Fig. 2 ersichtlich, erstreckt sich ein Abschnitt 10aaa des Dichtelements zapfenförmig durch das Versteifungselement 10ab hindurch. Dieser Zapfen ist mit einer Verdickung derart geformt, dass das Dichtelement 10aa mit einer Hinterschneidung am Versteifungselement 10ab gehalten ist. Ferner bildet dieser Abschnitt 10aaa ein Anschlagelement für den Abstandhalter 12, das ein Herausfallen des Abstandhalters 12 verhindert. Der Abstandhalter 12 muss gegen die elastische Kraft des Abschnitts 10aaa herausgenommen werden.

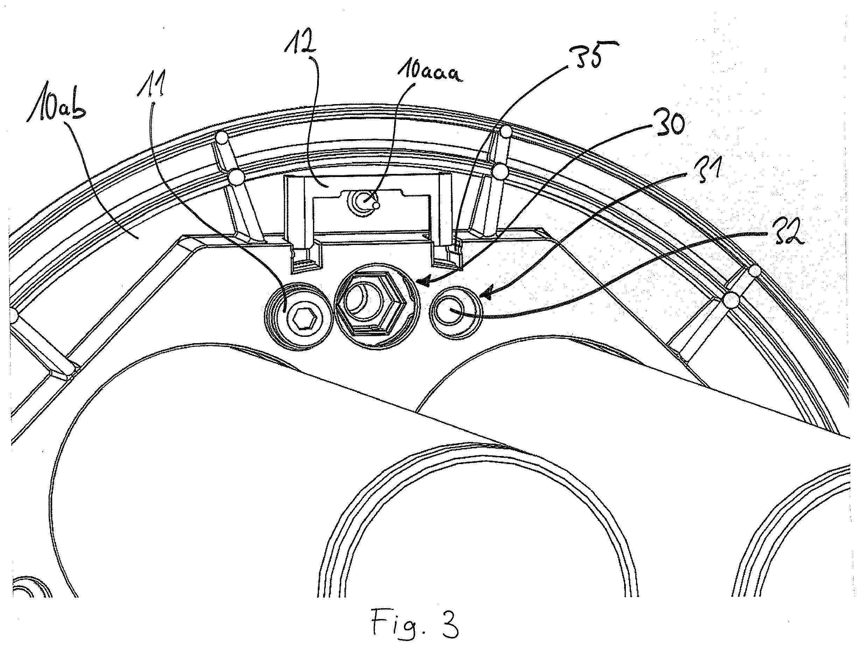

Die Schrägansicht gemäß Fig. 3 illustriert eine solche Situation nach bzw. während des Herausnehmens des Abstandhalters 12. Der U-förmig vorgesehene Abstandhalter 12 hat hier bereits das Anschlagelement passiert, der Relativversatz des Flanschelements 10 ist damit freigegeben. In der Fig. 3 ist auch eine Quetschrippe 35 zu erkennen, welche den Abstandhalter bzw. einen Schenkel davon kraftschlüssig in der Blockadeposition hält (der vorliegend gezeigte Abstandhalter weist zwei Schenkel auf, die jeweils in einer Quetschrippe gehalten sind), der Abstandhalter kann also nur mit gewissen Kraftaufwand aus dem Klemmsitz gezogen werden (vorliegend ist er bereits herausgezogen). Die Quetschrippe 35 und der zapfenförmige Abschnitt 10aaa sind vorliegend gemeinsam realisiert, sie können aber ebenso alternativ zueinander vorgesehen sein.

In Fig. 3 ist ferner eine Öffnung 30 im Mittenteil 10b des Flanschelements 10 zu erkennen, durch welche hindurch der Spannbolzen 5c der Pressdichtung 4, 5 betätigt werden kann. Ferner ist eine weitere Öffnung 31 zu erkennen, durch die hindurch ein Anzeigeelement 32 der Pressdichtung 4, 5 zu erkennen ist. Das Erscheinen des Anzeigeelementes 32 in einem Anzeigebereich signalisiert dem Monteur eine hinreichende Verpressung des Pressdichtung 4, 5, also ein hinreichendes Drehmoment beim Anziehen der Spannbolzen 5c. Schließlich ist in der Schrägansicht gemäß Fig. 3 auch noch das Spannelement 11 zu erkennen, mit dem nach dem Entfernen des Abstandhalters 12 das Flanschelement 10 zur Pressdichtung 4, 5 hin versetzt werden kann.

Fig. 4 zeigt eine Gebäudeeinführung 40 mit einem vorstehend beschriebenen Pressdichtungssystem 1. Die Gebäudeeinführung 40 weist ferner eine weitere Pressdichtung 41 auf, die gebäudeinnenseitig angeordnet ist. In der weiteren Pressdichtung 41 sind die Mantelrohre 8 auszugsicher gehalten. Bei der Montage wird nun zunächst von der Gebäudeinnenseite her die weitere Pressdichtung 41 mit den Mantelrohren 8 in die Öffnung 2 eingeschoben, die Mantelrohre 8 stehen dann außenseitig über. Von der Gebäudeaußenseite her wird dann das Pressdichtungssystem 1 mit dem Flanschelement 10 auf die Mantelrohre 8 aufgeschoben und in vorstehend beschriebener Weise montiert. Anschließend werden an die Mantelrohre 8 Schutzrohre 42 angeschlossen, in diesen werden dann die eigentlichen Leitungen (Strom, Gas, Elektro, Daten) von einer Anschlussstelle gebäudeaußenseitig zu der Gebäudeeinführung 40 hin verlegt. An der weiteren Pressdichtung 41 finden sich dann hier nicht im Einzelnen dargestellte Einzelabdichtungen, mit denen eine jeweilige Leitung gegen das jeweilige Mantelrohr gedichtet wird.

## Patentansprüche

1. Pressdichtungssystem (1) zum Montieren an einer Öffnung (2),
welches Pressdichtungssystem (1) eine Pressdichtung (4, 5) mit einem Elastomerkörper (4) und einer Verspanneinrichtung (5) sowie ein Flanschelement (10) mit einem Spannelement (11) aufweist,
wobei die Pressdichtung (4, 5) zur Befestigung in der Öffnung (2) vorgesehen ist, nämlich der Elastomerkörper (4) durch Betätigen der Verspanneinrichtung (5) entlang einer Spannachse (6) stauchbar und in Richtungen (15) senkrecht dazu nach außen anpressbar ist,
und wobei ein Flansch (10a) des Flanschelements (10) zum Andrücken gegen eine Wandfläche (3a) vorgesehen ist und der Flansch (10a) die Pressdichtung (4, 5) in Richtungen senkrecht zu der Spannachse (6) nach außen überragt,
und wobei das Flanschelement (10) zum Andrücken des Flansches (10a) relativ zu der Pressdichtung axial versetzbar und jedenfalls in einer der Pressdichtung (4, 5) proximalen Position von dem Spannelement (11) an der Pressdichtung (4, 5) gehalten ist,
und wobei ferner das Flanschelement (10) auch in einer der Pressdichtung (4, 5) distalen Position an der Pressdichtung (4, 5) gehalten ist, **dadurch gekennzeichnet, dass** das Pressdichtungssystem (1) ferner einen Abstandhalter (12) aufweist, der in einer Blockadekonfiguration das Flanschelement (10) in der distalen Position hält und in einer Freigabekonfiguration das Versetzen des Flanschelements (10) zu der Pressdichtung (4, 5) hin, in die proximale Position freigibt.

2. Pressdichtungssystem (1) nach Anspruch 1, bei welchem der Abstandhalter (12) als gesondertes Teil in einer Blockadestellung axial zwischen der Pressdichtung (4, 5) und dem Flanschelement (10) angeordnet ist und mit einer Richtungskomponente senkrecht zu der Spannachse (6) herausnehmbar ist.

3. Pressdichtungssystem (1) nach Anspruch 2, bei welchem der Abstandhalter (12) in der Blockadestellung gegen ein Herausfallen gesichert ist.

4. Pressdichtungssystem (1) nach Anspruch 3, bei welchem ein elastisch auslenkbares Anschlagelement (10aaa) vorgesehen ist, an welchem der Abstandhalter (12) in der Blockadestellung anliegt oder bei einer Bewegung von der Blockadestellung in eine Freigabestellung einen Anschlag findet, wobei das Anschlagelement (10aaa) beim Herausnehmen des Abstandhalters (12) ausgelenkt wird.

5. Pressdichtungssystem (1) nach einem der vorstehenden Ansprüche, bei welchem das in der Freigabestellung des Abstandhalters (12) freigegebene Versetzen des Flanschelements (10) einen Stellweg von mindestens 5 mm hat.

6. Pressdichtungssystem (1) nach einem der vorstehenden Ansprüche, bei welchem das Spannelement (11) ein Bolzen ist, vorzugsweise ein Gewindebolzen.

7. Pressdichtungssystem (1) nach einem der vorstehenden Ansprüche, bei welchem der Flansch (10a) ein umlaufendes Dichtelement (10aa) zur Anlage an der Wandfläche und ein Versteifungselement (10ab) zum Andrücken des Dichtelements (aa) aufweist.

8. Pressdichtungssystem (1) nach Anspruch 7, bei welchem das Dichtelement (10aa) an einer Außenwandfläche der Pressdichtung (4, 5) anliegt, vorzugsweise an einer Außenwandfläche eines Presskörpers (5a), der Teil der Verspanneinrichtung (5) der Pressdichtung (4, 5) ist.

9. Pressdichtungssystem (1) nach Anspruch 7 oder 8 in Verbindung mit Anspruch 4, bei welchem sich ein Abschnitt (10aaa) des Dichtelements (10aa) durch das Versteifungselement (10ab) hindurch erstreckt und das Anschlagelement (10aaa) bildet.

10. Pressdichtungssystem (1) nach einem der vorstehenden Ansprüche, bei welchem ein Mittenteil (10b) des Flanschelements (10), das eine dem Flanschelement (10) zugewandte Stirnseite der Pressdichtung (4, 5) abdeckt, eine Öffnung (30) aufweist, durch die hindurch ein Spannbolzen (5c) betätigbar ist, der Teil der Verspanneinrichtung (5) der Pressdichtung (4, 5) ist.

11. Pressdichtungssystem (1) nach einem der vorstehenden Ansprüche mit zwei Presskörpern (5a, b) als Teil der Verspanneinrichtung (5), zwischen welchen der Elastomerkörper (4) entlang der Spannachse (6) stauchbar ist, wobei der Elastomerkörper (4) jedenfalls in dem axial gestauchten Zustand die Presskörper (5a, b) nach außen überragt, bezogen auf die Richtungen (15) senkrecht zu der Spannachse (6).

12. Gebäudeeinführung (40) mit einem Pressdichtungssystem (1) nach einem der vorstehenden Ansprüche und mit einem Mantelrohr, welches den Elastomerkörper der Pressdichtung (4, 5) durchsetzt.

13. Verwendung eines Pressdichtungssystems (1) nach einem der Ansprüche 1 bis 11 oder einer Gebäudeeinführung (40) nach Anspruch 12 zum Montieren an einer Öffnung, wobei:
- zunächst die Pressdichtung (4, 5) mit dem Flanschelement (10) daran an die Öffnung (2) gesetzt wird;
- dann die Pressdichtung (4, 5) in der Öffnung (2) befestigt wird, nämlich durch Betätigen der Verspanneinrichtung (5) der Elastomerkörper (4) gegen eine die Öffnung (2) begrenzende Laibung (7) gedrückt wird;
- anschließend das Flanschelement (10), das beim Befestigen der Pressdichtung (4, 5) in der der Pressdichtung (4, 5) distalen Position angeordnet ist, zumindest in Richtung der proximalen Position versetzt und damit der Flansch (10a) gegen die Wandfläche (3a) gedrückt wird.

14. Verwendung nach Anspruch 13, bei welcher die Pressdichtung (4, 5) in die Öffnung (2) eingeschoben wird, bis der Flansch (10a) an der Wandfläche (3a) anliegt und anschließend die Verspanneinrichtung (5) betätigt wird.

## Claims

1. A compression seal system (1) for mounting at an opening (2),
which compression seal system (1) comprises a compression seal (4, 5) with an elastomer body (4) and a clamping arrangement (5), as well as a flange element (10) with a clamping element (11),
wherein the compression seal (4, 5) is provided to be secured in the opening (2), wherefore namely the elastomer body (4) can be compressed along a clamping axis (6) through actuation of the clamping arrangement (5) and can be pressed outwards in directions (15) perpendicular to this axis,
and wherein a flange (10a) of the flange element (10) is provided to be pressed against a wall surface (3a) and the flange (10a) projects outwards over the compression seal (4, 5) in directions perpendicular to the clamping axis (6),
and wherein the flange element (10) can be displaced axially relative to the compression seal so that the flange (10a) can be pressed, and is held at the compression seal (4, 5) by the clamping element (11) at least in a position proximal to the compression seal (4, 5), and
wherein the flange element (10) is further also held at the compression seal (4, 5) in a position distal to the compression seal (4, 5),
**characterised in that** the compression seal system (1) further has a spacer (12) which, in a blocking configuration, holds the flange element (10) in the distal position and, in a release configuration, releases the displacement of the flange element (10) towards the compression seal (4, 5), into the proximal position.

2. The compression seal system (1) according to claim 1, wherein the spacer (12) is arranged as a separate part in a blocking position axially between the compression seal (4, 5) and the flange element (10) and can be removed with a directional component perpendicular to the clamping axis (6).

3. The compression seal system (1) according to claim 2, wherein the spacer (12) is secured against falling out when in the blocking position.

4. The compression seal system (1) according to claim 3, wherein an elastically deflectable stop element (10aaa) is provided, which the spacer (12) touches when in the blocking position or when moved from the blocking position to a released position, whereby the stop element (10aaa) is deflected when the spacer (12) is removed.

5. The compression seal system (1) according to one of the preceding claims, wherein, in the released position of the spacer (12), the released displacement of the flange element (10) comprises a travel of at least 5 mm.

6. The compression seal system (1) according to one of the preceding claims, wherein the clamping element (11) is a bolt, preferably a threaded bolt.

7. The compression seal system (1) according to one of the preceding claims, wherein the flange (10a) has a circumferential sealing element (10aa) for placing against the wall surface and a stiffening element (10ab) for pressing on the sealing element (10aa).

8. The compression seal system (1) according to claim 7, wherein the sealing element (10aa) sits against an external wall surface of the compression seal (4, 5), preferably against an external wall surface of a compression body (5a) which forms part of the clamping arrangement (5) of the compression seal (4, 5).

9. The compression seal system (1) according to claim 7 or 8 in conjunction with claim 4, wherein a portion (10aaa) of the sealing element (10aa) extends through the stiffening element (10ab) and forms the stop element (10aaa).

10. The compression seal system (1) according to one of the preceding claims, wherein a centre part (10b) of the flange element (10), which covers the front side of the compression seal (4, 5) facing towards the flange element (10), has an opening (30) through which a clamping bolt (5c) can be actuated, with said bolt forming part of the clamping arrangement (5) of the compression seal (4, 5).

11. The compression seal system (1) according to one of the preceding claims, comprising two compression bodies (5a, b) as part of the clamping arrangement (5), between which bodies the elastomer body (4) can be compressed along the clamping axis (6), wherein in the axially compressed state, at least, the elastomer body (4) projects outwards over the compression bodies (5a, b), with respect to the directions (15) perpendicular to the clamping axis (6).

12. A building entry (40) comprising a compression seal system (1) according to one of the preceding claims and a casing pipe which goes through the elastomer body of the compression seal (4, 5).

13. Use of a compression seal system (1) according to one of claims 1 to 11 or a building entry (40) according to claim 12 for mounting at an opening, wherein:
- first the compression seal (4, 5) with the flange element (10) is placed at the opening (2);
- then the compression seal (4, 5) is secured in the opening (2), wherefore namely the elastomer body (4) is pressed against a soffit (7) defining the opening (2), by actuating the clamping arrangement (5);
- then the flange element (10), which is arranged in the position distal to the compression seal (4, 5) when the compression seal (4, 5) is secured, is displaced at least towards the proximal position, thereby pressing the flange (10a) against the wall surface (3a).

14. Use according to claim 13, wherein the compression seal (4, 5) is inserted into the opening (2) until the flange (10a) is sitting against the wall surface (3a) and the clamping arrangement (5) is then actuated.

## Revendications

1. Système de joint à compression (1) destiné à être installé dans une ouverture (2),
ledit système de joint à compression (1) présentant un joint à compression (4, 5), constitué d'un corps en élastomère (4) et d'un dispositif de serrage (5), ainsi qu'un élément à bride (10) comportant un élément de fixation (11), ledit joint à compression (4, 5) étant prévu pour être fixé dans l'ouverture (2), à savoir que le corps en élastomère (4) peut être écrasé dans le sens d'un axe de serrage (6) sous l'effet de l'actionnement du dispositif de serrage (5) et peut être compressé sur l'extérieur dans des directions (15) perpendiculaires audit axe,
une bride (10a) de l'élément à bride (10) étant prévue pour être pressée contre une surface murale (3a), ladite bride (10a) faisant saillie vers l'extérieur par rapport au joint à compression (4, 5) dans des directions perpendiculaires à l'axe de serrage (6), et
ledit élément à bride (10) pouvant être décalé axialement par rapport au joint à compression pour que la bride (10a) puisse être pressée, et étant, du moins dans une position proximale par rapport au joint à compression (4, 5), retenu sur le joint à compression (4, 5) par l'élément de fixation (11),
et l'élément à bride (10) étant de surcroît également retenu sur le joint à compression (4, 5) dans une position distale par rapport au joint à compression (4, 5),
**caractérisé en ce que** le système de joint à compression (1) présente en outre une cale (12) qui, dans une configuration de blocage, retient l'élément à bride (10) dans la position distale et qui, dans une configuration de dégagement, autorise le rapprochement de l'élément à bride (10) par rapport au joint à compression (4, 5) vers la position proximale.

2. Système de joint à compression (1) selon la revendication 1, dans lequel la cale (12), formant une pièce distincte, est disposée axialement dans une situation de blocage entre le joint à compression (4, 5) et l'élément à bride (10), et est susceptible d'être retirée avec une composante directionnelle perpendiculaire à l'axe de serrage (6).

3. Système de joint à compression (1) selon la revendication 2, dans lequel la cale (12) est protégée contre tout retrait lorsqu'elle se trouve en situation de blocage.

4. Système de joint à compression (1) selon la revendication 3, dans lequel il est prévu un élément de butée (10aaa) susceptible de subir une déflexion élastique, sur lequel vient reposer la cale (12) dans la situation de blocage ou sur lequel elle vient en butée suite au passage d'une situation de blocage à une situation de dégagement, ledit élément de butée (10aaa) subissant la déflexion lors du retrait de la cale (12).

5. Système de joint à compression (1) selon l'une des revendications précédentes, dans lequel le décalage autorisé de l'élément à bride (10), lorsque la cale (12) est en situation de dégagement, présente une course d'au moins 5 mm.

6. Système de joint à compression (1) selon l'une des revendications précédentes, dans lequel l'élément de fixation (11) est un boulon, de préférence un boulon fileté.

7. Système de joint à compression (1) selon l'une des revendications précédentes, dans lequel la bride (10a) présente un élément d'étanchéité (10aa) circonférentiel destiné à venir en butée contre la surface murale et un élément rigidifiant (10ab) destiné à assurer la pression de l'élément d'étanchéité (10aa).

8. Système de joint à compression (1) selon la revendication 7, dans lequel l'élément d'étanchéité (10aa) repose sur une surface de paroi extérieure du joint à compression (4, 5), de préférence sur une surface de paroi extérieure d'un corps de compression (5a) faisant partie du dispositif de serrage (5) du joint à compression (4, 5).

9. Système de joint à compression (1) selon la revendication 7 ou 8, conjointement à la revendication 4, dans lequel une portion (10aaa) de l'élément d'étanchéité (10aa) traverse l'élément rigidifiant (10ab) et vient former l'élément de butée (10aaa).

10. Système de joint à compression (1) selon l'une des revendications précédentes, dans lequel une partie médiane (10b) de l'élément à bride (10), qui couvre une face frontale du joint à compression (4, 5) tournée vers l'élément à bride (10), présente une ouverture (30) à travers laquelle peut être actionné un boulon de serrage (5c) faisant partie du dispositif de serrage (5) du joint à compression (4, 5).

11. Système de joint à compression (1) selon l'une des revendications précédentes, comportant deux corps de compression (5a, b) constitutifs du dispositif de serrage (5), entre lesquels le corps en élastomère (4) peut être écrasé dans le sens de l'axe de serrage (6), ledit corps en élastomère (4) faisant saillie vers l'extérieur par rapport aux corps de compression (5a, b), du moins à l'état d'écrasement axial, eu égard aux directions (15) perpendiculaires à l'axe de serrage (6).

12. Traversée de mur (40) comportant un système de joint à compression (1) selon l'une des revendications précédentes ainsi qu'un tube fourreau traversant le corps en élastomère du joint à compression (4, 5).

13. Utilisation d'un système de joint à compression (1) selon l'une des revendications 1 à 11 ou d'une traversée de mur (40) selon la revendication 12 destinés à être installés dans une ouverture, selon laquelle:
- on place tout d'abord dans l'ouverture (2) le joint à compression (4, 5) sur lequel est présent l'élément à bride (10);
- on fixe ensuite le joint à compression (4, 5) dans l'ouverture (2), à savoir que le corps en élastomère (4) est pressé contre un intrados (7) délimitant l'ouverture (2), grâce à l'actionnement du dispositif de serrage (5);
- on fait par la suite effectuer un décalage, au moins en direction de la position proximale, à l'élément à bride (10) qui se trouve, au moment de la fixation du joint à compression (4, 5), dans la position distale par rapport au joint à compression (4, 5), et on presse ainsi la bride (10a) contre la surface murale (3a).

14. Utilisation selon la revendication 13, selon laquelle on repousse le joint à compression (4, 5) dans l'ouverture (2) jusqu'à ce que la bride (10a) repose contre la surface murale (3a), puis on actionne le dispositif de serrage (5).
